# EUROPEAN PATENT APPLICATION

(11) **EP 4 589 752 A1**
(43) Date of publication of application: **23.07.2025**
(21) Application number: 23916740.6
(22) Date of filing: 18.01.2023
(51) Int. Cl.: H01M 50/451, H01M 50/449, H01M 50/40

(54) **SEPARATOR AND PREPARATION METHOD THEREFOR, BATTERY, AND ELECTRICAL DEVICE**

(71) Applicant: Contemporary Amperex Technology (Hong Kong) Limited, Central (HK)
(72) Inventor: MU, Xueying, Ningde, Fujian 352100 (CN); YANG, Jianrui, Ningde, Fujian 352100 (CN); OUYANG, Chuying, Ningde, Fujian 352100 (CN); SUN, Chengdong, Ningde, Fujian 352100 (CN); HUANG, Siying, Ningde, Fujian 352100 (CN); WANG, Yaohui, Ningde, Fujian 352100 (CN); WANG, Zhaoguang, Ningde, Fujian 352100 (CN); HAN, Chongwang, Ningde, Fujian 352100 (CN)
(74) Representative: Ziebig Hengelhaupt Intellectual Property Attorneys Patentanwaltskanzlei PartGmbB
(86) International application number: PCT/CN2023/072922
(87) International publication number: WO 2024/152253

(57) **Abstract**

This application provides a separator, including a base film and a coating layer disposed on at least one side surface of the base film; where the coating layer includes a color-developing agent, and the color-developing agent is capable of developing color when exposed to excitation light. Adding the color-developing agent to the coating layer of the separator can develop the color of the separator, making it easy to detect whether there are defects in the coating layer, such as omitted coating, uneven coating, and pinholes.

## Description

### TECHNICAL FIELD

This application pertains to the technical field of new energy materials, and specifically, to a separator and a preparation method thereof, a battery, and an electric apparatus.

### BACKGROUND

Batteries have been widely used in various consumer electronic products and electric vehicles due to their prominent advantages of light weight, no pollution, and no memory effect.

With continuous development of the new energy industry, higher use requirements are imposed on the batteries. For example, in some batteries, there may be abnormalities in the separator, which may cause a short circuit between the positive and negative electrodes, resulting in safety hazards. However, abnormalities in the existing separator are difficult to detect and identify, so how to easily detect separator abnormalities is an issue to be resolved urgently.

### SUMMARY

In view of the technical problems in the background, this application provides a separator and a preparation method thereof, a battery, and an electric apparatus, aiming to enhance the characteristics of the separator, so as to implement more intuitive abnormality detection.

To achieve the foregoing objective, a first aspect of this application provides a separator, including: a base film and a coating layer disposed on at least one side surface of the base film; where the coating layer includes a color-developing agent, and the color-developing agent is capable of developing color when exposed to excitation light.

Compared to the prior art, this application at least includes the following beneficial effects: Adding the color-developing agent to the coating layer of the separator can develop the color of the separator, making it easy to detect whether there are defects in the coating layer, such as omitted coating, uneven coating, and pinholes. The color-developing agent selected in this case may be a luminescent agent that emits colored light, with a wide selection range, high brightness, long luminescence time, and no impact on the basic performance of the separator. In other words, when the separator needs to be inspected, the separator is placed in an environment with light of a specific wavelength, causing the separator to develop color. The developed color is used for determining whether there is any defect or abnormality. Under exposure without specific light, the separator returns to its original state.

In any embodiment of this application, the color-developing agent includes a fluorescent agent, and the fluorescent agent is capable of emitting colored fluorescence when exposed to ultraviolet light. With the use of the fluorescent agent, the detection condition is easy to achieve, reducing detection costs; the light used for detection has no significant impact on the basic performance of the separator. The developed color is bright and easy to distinguish, improving detection accuracy and efficiency.

In any embodiment of this application, the fluorescent agent includes one or more of rare earth-doped tungstate, rare earth-doped phosphate, rare earth-doped silicate, rare earth-doped titanate, and rare earth-doped aluminum. The used materials have stable chemical performance, imposing no significant impact on the battery performance, sensitive reaction, simple luminescence triggering condition, and high luminescence brightness for a long time. They also have advantages such as environmental friendliness, safety, and low costs, suitable for mass production.

In any embodiment of this application, the rare earth-doped tungstate includes one or more of CaWO₄:Eu³⁺, CaWO₄:Dy³⁺, CaWO₄:Sm³⁺, and CaWO₄:Tb³⁺.

In any embodiment of this application, the rare earth-doped phosphate includes one or more of NaCaPO₄:Eu²⁺, NaCaPO₄:Tb³⁺, Ba₂Mg(PO₄)₂:Ce³⁺, and Ba₂Mg(PO₄)₂:Tb³⁺.

In any embodiment of this application, the rare earth-doped silicate includes Ca₈Mg(SiO₄)₄Cl₂:Eu²⁺.

In any embodiment of this application, the rare earth-doped titanate includes NaGdTiO₄:Sm³⁺, NaLaTiO₄:Eu³⁺, and NaLaTiO₄:Dy³⁺.

In any embodiment of this application, the rare earth-doped aluminum includes one or more of SrAl₂O₄:Eu²⁺ and SrAl₂O₄:Dy³⁺.

In any embodiment of this application, the coating layer further includes a filler, the filler includes one or more of inorganic particles with a dielectric constant being 5 or higher, inorganic particles capable of transmitting active ions, and inorganic particles capable of undergoing electrochemical oxidation and reduction. Adding the filler can further improve the thermal stability of the separator, thereby improving the safety performance of the battery.

In any embodiment of this application, the coating layer further includes a binder, and the binder includes one or more of polyacrylate, polyacrylonitrile, styrene-butadiene rubber, epoxy resin, acrylonitrile-butadiene copolymer, acrylonitrile-butadiene-styrene copolymer, polybutyl acrylate-ethylhexyl acrylate copolymer, polymethyl methacrylate-ethylhexyl acrylate copolymer, polyvinyl chloride, polyvinylidene fluoride, vinylidene fluoride-hexafluoropropylene copolymer, vinylidene fluoride-trichloroethylene copolymer, polyvinyl alcohol, styrene, polycyanoacrylate, polymethyl methacrylate, polyvinylpyrrolidone, polyvinyl acetate, ethylene-vinyl acetate copolymer, polyimide, gelatin, polyethylene glycol, polyethylene glycol dimethyl ether, and ethylene glycol dimethyl ether. The addition of a binder can bond various components in the coating layer, enhance the adhesion between the coating layer and the base film, reduce abnormalities such as powder shedding from the coating layer, and prolong the service life of the separator, thereby improving the cycling performance and safety of the battery.

In any embodiment of this application, the coating layer further includes one or more of a dispersant, a wetting agent, and a thickener. The addition of the dispersant, wetting agent, and thickener can improve the uniformity of the coating layer slurry, allowing for better dispersion of the solid components of the coating layer slurry in the liquid components, thereby regulating the solid content, fluidity, and the like of the coating layer slurry. This allows for more uniform coating and reduces defects such as omitted coating and pinholes.

In any embodiment of this application, the dispersant includes one or more of polyvinylpyrrolidone and polyethylene glycol. The selection of these dispersants can promote the uniform dispersion of the color-developing agent and the filler, resulting in a more uniform coating layer.

In any embodiment of this application, the thickener includes one or more of methyl cellulose, carboxymethyl cellulose, hydroxy ethyl cellulose, and hydroxypropyl methyl cellulose. The selection of these thickeners can increase the solid content of the coating layer slurry and reasonably regulate the fluidity of the slurry, making it more conducive to coating.

In any embodiment of this application, the wetting agent includes one or more of siloxane, glycerol, N-methylpyrrolidone, sodium dodecyl benzene sulfonate, and perfluoroalkyl Sulfonate. The selected wetting agent easily acts on the filler and the color-developing agent, reducing their surface or interfacial tension, and allowing them to be more easily wetted by the liquid phase, thereby facilitating dispersion.

In any embodiment of this application, based on a mass of the coating layer, a mass percentage of the color-developing agent is 1%-50%, preferably 5%-30%. Regulating the color-developing agent within the given range can increase the brightness of the emitted light, making the color development more obvious, thereby improving detection efficiency and accuracy. This does not affect the basic performance of the separator, such as air permeability.

In any embodiment of this application, a particle size Dᵥ50 of the color-developing agent is 0.01 µm-3 µm, preferably 0.1 µm-1 µm. As the particle size of the color-developing agent is controlled within the given range, the color-developing agent can meet the color development requirements without affecting the basic performance of the separator, for example, it does not increase the air permeability of the separator due to the addition of more additives.

In any embodiment of this application, the structure of the base film is a single layer, and the coating layer is located on one side/both sides of the base film. Providing the coating layer allows the separator to have good heat resistance and mechanical strength.

In any embodiment of this application, the structure of the base film is two layers, with the coating layer located between the two base films, or on one side or both sides of at least one base film. Providing the two-layer base film allows the separator to have good heat resistance, as well as good tensile strength and puncture-resistant strength, reducing the risk of the separator being pierced by lithium dendrites, and improving the safety of the battery.

In any embodiment of this application, the structure of the base film is multiple layers, with the coating layer located between the two base films, or on one side or both sides of at least one base film. Through the combination of the multi-layer base film and the coating layer, multiple functions can be superimposed and enhanced, thereby improving the overall performance of the separator.

In any embodiment of this application, the separator has an air permeability of 100-400 s/100 cc. Compared to the conventional separator, the additive imposes no significant impact on the air permeability of the separator.

In any embodiment of this application, the coating layer has a thickness of 0.1 µm-10 µm, preferably 0.5 µm-5 µm; and the base film has a thickness of 2 µm-12 µm, preferably 3 µm-9 µm. Controlling the thickness of the base film and the coating layer within the given ranges can meet the color development requirements and reduce the total thickness of the separator, thereby reducing the battery space occupied by the separator and increasing the battery capacity.

A second aspect of this application provides a separator preparation method, including: providing a base film;
providing a coating layer slurry, where the coating layer slurry includes a color-developing agent, and the color-developing agent is capable of developing color when exposed to excitation light; and applying the coating layer slurry to at least one side surface of the base film to obtain the separator according to any one of the foregoing embodiments. According to the preparation method provided in this application, defects such as omitted coating, uneven coating, and pinholes can be detected, allowing for timely process improvement and increasing the product yield.

In an embodiment, a percentage of the color-developing agent in the coating layer slurry is 0.5%-30%, preferably 4%-15%.

In an embodiment, the color-developing agent includes a fluorescent agent, the fluorescent agent can be prepared through a high-temperature solid-state method or a sol-gel method, preferably a high-temperature solid-state method. Specifically, one or more powder materials are ball milled in a ball mill for several hours, mixed to uniformity, and sintered in a high-temperature furnace at 700°C-1200°C. After the sintered product cools, it is ground to obtain the fluorescent luminescent agent with the target particle size. It has advantages such as environmental friendliness, safety, and low costs, suitable for mass production.

A third aspect of this application provides a battery, including a positive electrode, a negative electrode, and the separator according to any one of the preceding embodiments; and the separator is configured to separate the adjacent positive and negative electrodes.

Because the battery of this application includes the separator provided by this application, in a case of abnormality of the battery, the separator can be inspected effectively to determine whether the separator is abnormal, thus checking whether the separator causes an undesirable situation.

A fourth aspect of this application provides an electric apparatus, including the foregoing battery.

The apparatus in this application includes the battery provided in this application, and therefore has at least the same advantages as the battery.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural cross-sectional view of a separator according to some embodiments of this application;
FIG. 5 is a schematic structural cross-sectional view of a separator according to some embodiments of this application; and
FIG. 6 is a schematic structural cross-sectional view of a separator according to some embodiments of this application.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

Unless otherwise specified, the terms used in this application have well known meanings commonly understood by persons skilled in the art. Unless otherwise specified, numerical values of parameters mentioned in this application may be measured using various measurement methods commonly used in the art (for example, they may be tested using the methods provided in the embodiments of this application).

In recent years, with the development of new energy technologies, batteries have been applied in various consumer electronics and electric vehicles, nearly integrating into peoples' daily life. Thus, people have proposed increasingly high requirements for safety. There are multiple reasons leading to battery safety incidents, one of which may be due to separator abnormality. This is because the separator is used to insulate the positive electrode plate and the negative electrode plate. The separator being abnormal is likely to cause a short circuit between the positive electrode plate and the negative electrode plate, creating safety hazards.

Generally, a separator includes a base film, or a base film and a coating layer disposed on at least one side surface of the base film. The base film is typically made of a colorless or white polymer material, and similarly, the coating layer used is also colorless or white. Thus, the naked eye or machines cannot visually identify and distinguish whether there are defects such as uneven thickness of the base film, uneven coating layer, omitted coating, or pinholes in the coating layer. These defects reduce the performance of the separator and are likely to cause safety hazards.

To resolve this technical problem, this application provides a separator, including: a base film and a coating layer disposed on at least one side surface of the base film; where the coating layer includes a color-developing agent, and the color-developing agent is capable of developing color when exposed to excitation light. Adding the color-developing agent to the coating layer of the separator can develop the color of the separator, making it easy to detect whether there are defects in the coating layer, such as omitted coating, uneven coating, and pinholes.

The separator disclosed in embodiments of this application can be used in batteries, and the batteries can be applied to electric apparatuses using batteries as a power source or to various energy storage systems using batteries as a storage element. The electric apparatus may be but is not limited to a mobile phone, a tablet computer, a laptop computer, an electric toy, an electric tool, an electric bicycle, an electric vehicle, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

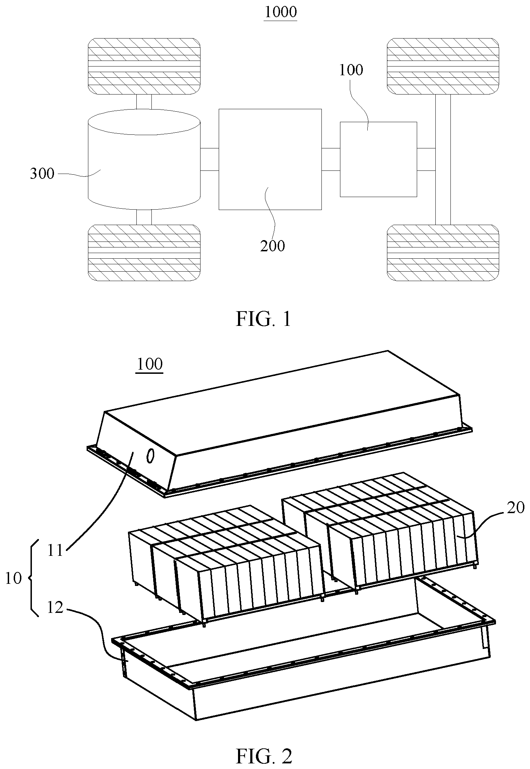

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2, which is a schematic structural exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, the battery cell 20 is present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

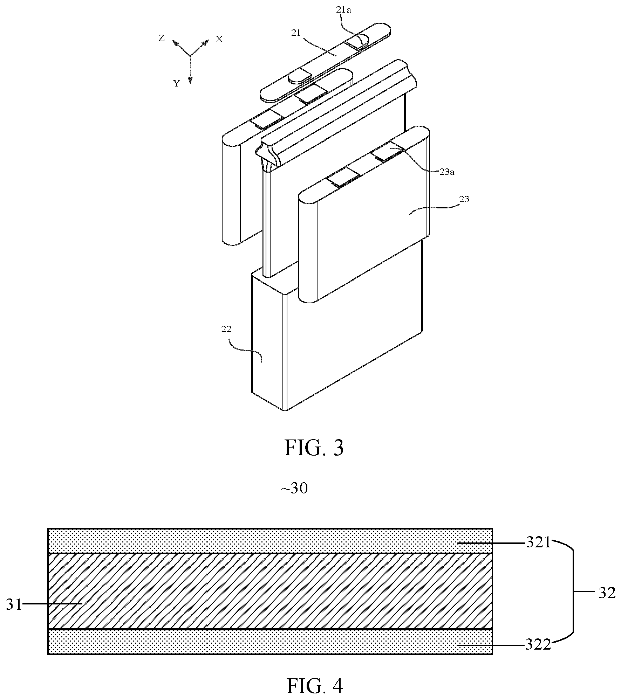

Refer to FIG. 3. FIG. 3 is a schematic structural exploded view of a battery cell 20 according to some embodiments of this application. The battery cell 20 refers to a smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate an internal environment of the battery cell 20 from an external environment. A shape of the end cover 21 is not limited and may be adapted to a shape of the housing 22 to fit the housing 22. Optionally, the end cover 21 may be made of a material with certain hardness and strength (for example, aluminum alloy), so that the end cover 21 is less likely to deform when subjected to extrusion and collision, allowing the battery cell 20 to have higher structural strength and enhanced safety performance. The end cover 21 may be provided with functional components such as an electrode terminal 21a. The electrode terminal 21a may be configured to be electrically connected to the electrode assembly 23 for outputting or inputting electrical energy of the battery cell 20. In some embodiments, the end cover 21 may also be provided with a pressure relief mechanism configured to relieve internal pressure when the internal pressure or temperature in the battery cell 20 reaches a threshold. The end cover 21 may also be made of various materials such as copper, iron, aluminum, stainless steel, aluminum alloy, and plastic. This is not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuit. For example, the insulator may be made of plastic, rubber, or the like.

The housing 22 is an assembly configured to form an internal environment of the battery cell 20 together with the end cover 21, where the formed internal environment may be used for accommodating the electrode assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may also be integrated. Specifically, the end cover 21 and the housing 22 may form a shared connection surface before other components are disposed inside the housing, and then the end cover 21 covers the housing 22 when inside of the housing 22 needs to be enclosed. The housing 22 may be of various shapes and sizes, for example, a rectangular shape, a cylindrical shape, and a hexagonal prism shape. Specifically, the shape of the housing 22 may be determined based on a specific shape and size of the electrode assembly 23. The housing 22 may be made of various materials such as copper, iron, aluminum, stainless steel, aluminum alloy, and plastic. This is not particularly limited in the embodiments of this application.

The electrode assembly 23 is a component in which electrochemical reactions take place in the battery cell 100. The housing 22 may include one or more electrode assemblies 23. The electrode assembly 23 is mainly formed by winding or stacking a positive electrode plate and a negative electrode plate, and a separator is generally provided between the positive electrode plate and the negative electrode plate. Parts of the positive electrode plate and the negative electrode plate with active substances constitute a body portion of the electrode assembly, while parts of the positive electrode plate and the negative electrode plate without active substances separately constitute a tab 23a. A positive electrode tab and a negative electrode tab may both be located at one end of the body portion or be located at two ends of the body portion respectively. During charging and discharging of the battery, a positive electrode active substance and a negative electrode active substance react with the electrolyte, and the tabs 23a are connected to the electrode terminals to form a current loop.

According to some embodiments of this application, a separator is provided, including a base film and a coating layer disposed on at least one side surface of the base film; where the coating layer includes a color-developing agent, and the color-developing agent is capable of developing color when exposed to excitation light.

The color-developing agent may be a fluorescent agent that can absorb incident light to produce fluorescence, endowing the substance with a glowing effect similar to fluorite. After absorbing different light, the agent can show a different color.

In this embodiment, adding the color-developing agent to the coating layer of the separator can develop the color of the separator, making it easy to detect whether there are defects in the coating layer, such as omitted coating, uneven coating, and pinholes. And adding the color-developing agent does not affect the basic performance of the separator. In other words, when the separator needs to be inspected, the separator is placed in an environment with light of a specific wavelength, and the separator emits colored light, indicating light development. The developed color is used for determining whether there is any defect or abnormality. Under exposure without specific light, the separator returns to its original state and does not affect observation of the surface cleanliness of the separator.

In any embodiment of this application, the color-developing agent includes a fluorescent agent, and the fluorescent agent is capable of emitting colored light when exposed to ultraviolet light.

The fluorescent agent is brighter and has higher contrast than other luminescent agents, more conducive to observing and distinguishing when whether there is a defect in the coating layer is detected using color, resulting in a more accurate detection result. Some fluorescent agents immediately stop glowing once the incident light is removed. This type of emitted light is called fluorescence. Additionally, some substances can continue to emit light for a long time after the incident light is removed, which is a phenomenon known as afterglow. That is, a separator added with a fluorescent agent can emit light under excitation light and may also continue to emit light after the excitation light is removed. Further, with the use of the fluorescent agent, the detection condition is easy to achieve, reducing the impact of detection with ultraviolet light on the basic performance of the separator. The developed color is bright and easy to distinguish, improving detection accuracy and efficiency.

In any embodiment of this application, the fluorescent agent includes one or more of rare earth-doped tungstate, rare earth-doped phosphate, rare earth-doped silicate, rare earth-doped titanate, rare earth-doped aluminum, and metal-doped sulfide. The used materials have stable chemical performance, imposing no significant impact on the battery performance, sensitive reaction, simple luminescence triggering condition, and high luminescence brightness for a long time. They also have advantages such as environmental friendliness, safety, and low costs, suitable for mass production.

In one type of separator, one or more fluorescent agents can be selectively added to produce different colors of light. Two fluorescent agents that emit the same color light can be selected to enhance the luminescent effect; or fluorescent agents that emit different color lights can be selected to mix into more colors of light.

In any embodiment of this application, the rare earth-doped tungstate includes one or more of CaWO₄:Eu³⁺, CaWO₄:Dy³⁺, CaWO₄:Sm³⁺, and CaWO₄:Tb³⁺.

In any embodiment of this application, the rare earth-doped phosphate includes one or more of NaCaPO₄:Eu²⁺, NaCaPO₄:Tb³⁺, Ba₂Mg(PO₄)₂:Ce³⁺, and Ba₂Mg(PO₄)₂:Tb³⁺.

In any embodiment of this application, the rare earth-doped silicate includes Ca₈Mg(SiO₄)₄Cl₂:Eu²⁺.

In any embodiment of this application, the rare earth-doped titanate includes NaGdTiO₄:Sm³⁺, NaLaTiO₄:Eu³⁺, and NaLaTiO₄:Dy³⁺.

In any embodiment of this application, the rare earth-doped aluminum includes one or more of SrAl₂O₄:Eu²⁺ and SrAl₂O₄:Dy³⁺.

In any embodiment of this application, the coating layer further includes a filler, the filler includes one or more of inorganic particles with a dielectric constant being 5 or higher, inorganic particles capable of transmitting active ions, and inorganic particles capable of undergoing electrochemical oxidation and reduction.

Inorganic particles with a dielectric constant of 5 or higher may include at least one of boehmite (γ-AlOOH), aluminum oxide (Al₂O₃), barium sulfate (BaSO₄), magnesium oxide (MgO), magnesium hydroxide (Mg(OH)₂), silicon oxide compounds SiOx (0<x≤2), tin dioxide (SnO₂), titanium dioxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃ (abbreviated as PZT), Pb₁₋ₘLaₘZr₁₋ₙTiₙO₃ (abbreviated as PLZT, 0<m<1, 0<n<1), and Pb(Mg₃Nb_{2/3})O₃-PbTiO₃ (abbreviated as PMN-PT).

In some embodiments, inorganic particles capable of transmitting active ions may include at least one of lithium phosphate (Li₃PO₄), lithium titanium phosphate (LiₓTi_{y}(PO₄)₃, 0<x<2, 0<y<3), lithium aluminum titanium phosphate (LixAlyTiz(PO4)3, 0<x<2, 0<y<1, 0<z<3), (LiAlTiP)ₓO_{y} glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ glass (LiₓSi_{y}S_{z}, 0<x<3, 0<y<2, 0<z<4), and P₂S₅ glass (LixPySz, 0<x<3, 0<y<3, 0<z<7).

In some embodiments, inorganic particles capable of undergoing electrochemical oxidation and reduction may include at least one selected from lithium-containing transition metal oxide, lithium phosphate with an olivine structure, carbon-based material, silicon-based material, tin-based material, and lithium titanium compound.

Adding the filler can further improve the thermal stability of the separator, thereby improving the safety performance of the battery. For example, a heat-resistant filler can be added to enhance the heat resistance of the separator, thereby reducing the possibility of the separator being thermally broken down.

In any embodiment of this application, the coating layer further includes a binder, and the binder includes one or more of polyacrylate, polyacrylonitrile, styrene-butadiene rubber, epoxy resin, acrylonitrile-butadiene copolymer, acrylonitrile-butadiene-styrene copolymer, polybutyl acrylate-ethylhexyl acrylate copolymer, polymethyl methacrylate-ethylhexyl acrylate copolymer, polyvinyl chloride, polyvinylidene fluoride, vinylidene fluoride-hexafluoropropylene copolymer, vinylidene fluoride-trichloroethylene copolymer, polyvinyl alcohol, styrene, polycyanoacrylate, polymethyl methacrylate, polyvinylpyrrolidone, polyvinyl acetate, ethylene-vinyl acetate copolymer, polyimide, gelatin, polyethylene glycol, polyethylene glycol dimethyl ether, and ethylene glycol dimethyl ether. The addition of the binder can enhance the bonding between the components of the coating layer, enhance the adhesion between the coating layer and the base film, reduce abnormalities such as powder shedding from the coating layer, and prolong the service life of the separator, thereby improving the cycling performance and safety of the battery.

In any embodiment of this application, the coating layer further includes one or more of a dispersant, a wetting agent, and a thickener. The addition of the dispersant, wetting agent, and thickener can improve the uniformity of the coating layer slurry, allowing for better dispersion of the solid components of the coating layer slurry in the liquid components, thereby regulating the solid content, fluidity, and the like of the coating layer slurry. This allows for more uniform coating and reduces defects such as omitted coating and pinholes.

In any embodiment of this application, the dispersant includes one or more of polyvinylpyrrolidone and polyethylene glycol.

In any embodiment of this application, the thickener includes one or more of methyl cellulose, carboxymethyl cellulose, hydroxy ethyl cellulose, and hydroxypropyl methyl cellulose.

In any embodiment of this application, the wetting agent includes one or more of siloxane, glycerol, N-methylpyrrolidone, sodium dodecyl benzene sulfonate, and perfluoroalkyl Sulfonate.

In any embodiment of this application, based on a mass of the coating layer, a mass percentage of the color-developing agent is 1%-50%, preferably 5%-30%. It is specifically 0.5%, 0.8%, 1.1%, 1.3%, 1.5%, 1.8%, 2.3%, 3.0%, 3.5%, 4.0%, 4.5%, 5.0%, or the like. Regulating the luminescent agent within the given range can increase the brightness of the emitted light, thereby improving detection efficiency and accuracy. This also does not affect the basic performance of the separator. For example, this does not increase the air permeability of the separator due to the addition of more additives.

In any embodiment of this application, a particle size Dᵥ50 of the color-developing agent is 0.01 µm-3 µm, preferably 0.1 µm-1 µm. It may be specifically 0.05 µm, 0.1 µm, 0.5 µm, 1 µm, 2 µm, or the like. Dᵥ50 is the particle size corresponding to the cumulative material volume percentage reaching 50%. As the particle size of the luminescent agent is controlled within the given range, the luminescent agent can meet the color development requirements without affecting the basic performance of the separator. For example, it does not increase the air permeability of the separator due to the addition of more additives. Particle size by volume Dᵥ50 test: Refer to standard GB/T 19077.1-2016 and use a laser particle size analyzer (for example, Malvern Master Size 3000) to determine Dᵥ50, where Dᵥ50 is physically defined as the particle size corresponding to the cumulative material volume distribution percentage reaching 50%. The Dᵥ50 of the negative electrode materials obtained in various examples and comparative examples is 7 µm.

In any embodiment of this application, the structure of the base film is a single layer, and the coating layer is located on one side or both sides of the base film. Providing the coating layer allows the separator to have good performance such as heat resistance and mechanical strength. Refer to FIG. 4, which is a schematic structural cross-sectional view of a separator according to some embodiments of this application. The separator 30 includes a base film 31 and a coating layer 32. The coating layer 32 includes a first coating layer 321 and a second coating layer 322, with the first coating layer 321 and the second coating layer 322 located on both sides of the base film 31, respectively.

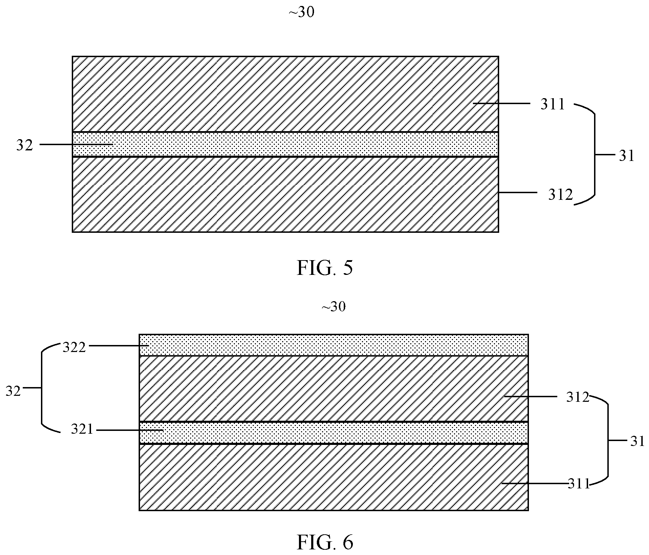

In any embodiment of this application, the structure of the base film is two layers, with the coating layer located between the two base films, or on one side or both sides of at least one base film. Providing the two-layer base film allows the separator to have good performance such as good heat resistance, as well as good tensile strength and puncture-resistant strength. This can further inhibit the formation of lithium dendrites, reduce the risk of the separator being pierced by lithium dendrites, and improve the safety of the battery. Refer to FIG. 5, which is a schematic structural cross-sectional view of a separator according to some embodiments of this application. The separator 30 includes a base film 31 and a coating layer 32. The base film 31 includes a first base film 311 and a second base film 312. The coating layer 32, serving as an intermediate layer, is located between the first base film 311 and the second base film 312.

In any embodiment of this application, the structure of the base film is multiple layers, with the coating layer located between the two base films, or on one side or both sides of at least one base film. Through the combination of the multi-layer base film and the coating layer, multiple functions can be superimposed and enhanced, thereby improving the overall performance of the separator. Refer to FIG. 6, which is a schematic structural cross-sectional view of a separator according to some embodiments of this application. The separator 30 includes a base film 31 and a coating layer 32. The base film 31 includes a first base film 311 and a second base film 312. The coating layer 32 includes a first coating layer 321 and a second coating layer 322. The first base film 311, the first coating layer 321, the second base film 312, and the second coating layer 322 are sequentially stacked.

In any embodiment of this application, the separator has an air permeability of 100-400 s/100 cc. Compared to the conventional separator, the additive imposes no significant impact on the air permeability of the separator.

In any embodiment of this application, the thickness of the coating layer is 0.1 µm-10 µm, preferably 0.5 µm-5 µm, and may specifically be 0.8 µm, 2 µm, 5 µm, 7 µm, 9 µm, or the like. Regulating the thickness of the coating layer within the given range can meet the color development requirements and reduce the total thickness of the separator, thereby reducing the battery space occupied by the separator and increasing the battery capacity.

A second aspect of this application provides a separator preparation method, including: providing a coating layer slurry, where the coating layer slurry includes a color-developing agent, and the color-developing agent is capable of developing color when exposed to excitation light; and applying the coating layer slurry to at least one side surface of the base film to obtain the separator according to any one of the foregoing embodiments. According to the preparation method provided in this application, defects such as omitted coating, uneven coating, and pinholes can be detected, allowing for timely process improvement and increasing the product yield.

Specifically, the color-developing agent and the filler are sequentially dispersed in deionized water in a certain weight ratio, added with a binder, a dispersant, a thickener, and a wetting agent, and stirred and mixed to prepare a coating layer slurry. The color-developing agent, the filler, the binder, the dispersant, the thickener, and the wetting agent used may be any one or more of those mentioned in the above embodiments.

A percentage of the color-developing agent in the coating layer slurry is 0.5%-30%, preferably 4%-15%.

A fluorescent agent can be prepared through a high-temperature solid-state method or a sol-gel method, preferably a high-temperature solid-state method. Specifically, one or more powder materials are ball milled in a ball mill for several hours, mixed to uniformity, and sintered in a high-temperature furnace at 700°C-1200°C. After the sintered product cools, it is ground to obtain the fluorescent luminescent agent with the target particle size. It has advantages such as environmental friendliness, safety, and low costs, suitable for mass production.

The coating layer slurry is applied to the surface of the base film using a micro-gravure roller to obtain a separator.

The coated separator is conveyed to a specific light irradiation region. Different fluorescent agents corresponding to different fluorescent colors are added to identify and record process abnormalities of fluorescent color differences due to defects such as uneven coating and missed coating.

A third aspect of this application provides a battery, including a positive electrode, a negative electrode, and the separator according to any one of the preceding embodiments; and the separator is configured to separate the adjacent positive and negative electrodes.

Because the battery of this application includes the separator provided by this application, in a case of abnormality of the battery, the separator can be inspected effectively to determine whether the separator is abnormal, thus checking whether the separator causes an undesirable situation.

A fourth aspect of this application provides an electric apparatus, including the foregoing battery.

The apparatus in this application includes the battery provided in this application, and therefore has at least the same advantages as the battery. The electric apparatus may be any one of the foregoing devices or systems using a battery.

The following describes the solutions of this application with reference to specific embodiments. Those skilled in the art will understand that the separator and the preparation method thereof described in this application are merely examples, and any other suitable solutions are within the scope of this application.

Specifically, a color-developing agent and a filler were sequentially dispersed in deionized water in a certain weight ratio, added with a binder, a dispersant, a thickener, and a wetting agent, and stirred and mixed to prepare a coating layer slurry.

Inorganic ceramic particles were selected as the filler, polyacrylate was selected as the binder, polyvinylpyrrolidone was selected as the dispersant, carboxymethyl cellulose was selected as the thickener, and siloxane was selected as the wetting agent. The color-developing agent could be a fluorescent agent. For specific substances, refer to Table 1. A weight fraction of the fluorescent agent in the coating layer slurry was controlled. For details, refer to Table 1.

The coating layer slurry was applied to the surface of the base film using a micro-gravure roller to obtain a separator. Then, air permeability of the resulting separator was tested using an air permeability tester. The specific operation steps were as follows: The separator was cut to an appropriate size and fixed on an instrument, a certain pressure was applied with the tester, and 100 mL of air was enabled to pass through the separator with an area of 642 mm². The time required for the gas to pass through the separator was the air permeability value of the separator.

The coated separator was conveyed to an ultraviolet light irradiation region. The fluorescent effect of the fluorescent agent was excited by an ultraviolet lamp, and then the CCD could lock an abnormal region by identifying the color difference between an abnormal point on the surface of the coated separator and a normal region. Thus, the detection for abnormality was performed.

The obtained separator was made into a battery, and cycled 10 times at room temperature, the battery was disassembled, the separator was taken out, and the fluorescent effect of the separator was tested. For specific results, refer to Table 1.

**Table 1: Performance parameters of various examples and comparative examples**

| | Addition amount of fluorescent agent | Material of fluorescent agent | Dᵥ50 particle size (µm) | Air permeability of separator (Sec/100 s) | Fluorescent effect | Fluorescent effect after cycling |
|---|---|---|---|---|---|---|
| Example 1 | 5% | CaWO₄:Eu³⁺ | 1.0 | 247.7 | An entire coating layer shows obvious and uniform luminescence within a long duration | An entire coating layer shows obvious and uniform luminescence within a long duration |
| Example 2 | 10% | CaWO₄:Eu³⁺ | 1.0 | 250.4 | An entire coating layer shows quite obvious and uniform luminescence within a quite long duration | An entire coating layer shows quite obvious and uniform luminescence within a quite long duration |
| Example 3 | 10% | CaWO₄:Eu³⁺ | 0.5 | 263.2 | An entire coating layer shows quite obvious and uniform luminescence within a quite long duration | An entire coating layer shows quite obvious but nonuniform luminescence within a quite long duration |
| Example 4 | 10% | Dy₂O₃ | 1.0 | 252.1 | An entire coating layer shows quite obvious and uniform luminescence within a quite long duration | An entire coating layer shows quite obvious and uniform luminescence within a quite long duration |
| Example 5 | 10% | CaWO₄:Eu³⁺ CaWO₄:Sm³⁺ | 1.0 | 272.1 | An entire coating layer shows quite obvious but nonuniform luminescence within a quite long duration | // |
| Comparative example 1 | / | None | / | 247.2 | None | None |
| Comparative example 2 | 0.1% | CaWO₄:Eu³⁺ | 1.0 | 240.8 | /Almost no brightness within a short luminescence time | None |

From the data in Table 1, it can be seen that the coating layer in Example 5 emits nonuniform light, indicating nonuniform coating and an unqualified separator. In contrast, Examples 1-4 show uniform emitted light from the coating layer, indicating a good coating effect and qualified separators. After being used in the battery for a period of time, the coating layer in Example 3 no longer emits uniform light, indicating that the separator was damaged during use, which is likely to cause battery safety issues and needs to be replaced promptly.

Therefore, with the addition of the fluorescent agent, which has a significant fluorescent effect under the action of specific light, defects such as omitted coating, uneven coating, and pinholes can be detected. Moreover, the addition of the luminescent agent does not significantly increase the air permeability of the separator, essentially not affecting the basic performance of the separator. Additionally, after battery cycling, the separator still retains a significant fluorescent effect, providing important guidance for the subsequent analysis of separator issues during the disassembly of abnormal battery cells.

The foregoing descriptions are merely specific embodiments of this application, but are not intended to limit the protection scope of this application. Any equivalent modifications or replacements readily figured out by a person skilled in the art within the technical scope disclosed in this application shall fall within the protection scope of this application. Therefore, the protection scope of this application shall be subject to the protection scope of the claims.

## Claims

1. A separator, comprising:
a base film and a coating layer disposed on at least one side surface of the base film; wherein
the coating layer comprises a color-developing agent, and the color-developing agent is capable of developing color when exposed to excitation light.

2. The separator according to claim 1, **characterized in that**
the color-developing agent comprises a fluorescent agent, and the fluorescent agent is capable of emitting colored fluorescence when exposed to ultraviolet light.

3. The separator according to claim 2, **characterized in that**
the fluorescent agent comprises one or more of rare earth-doped tungstate, rare earth-doped phosphate, rare earth-doped silicate, rare earth-doped titanate, rare earth-doped aluminum, and metal-doped sulfide.

4. The separator according to claim 3, **characterized in that**
the rare earth-doped tungstate comprises one or more of CaWO₄:Eu³⁺, CaWO₄:Dy³⁺, CaWO₄:Sm³⁺, and CaWO₄:Tb³⁺; and/or
the rare earth-doped phosphate comprises one or more of NaCaPO₄:Eu²⁺, NaCaPO₄:Tb³⁺, Ba₂Mg(PO₄)₂:Ce³⁺, and Ba₂Mg(PO₄)₂:Tb³⁺; and/or
the rare earth-doped silicate comprises Ca₈Mg(SiO₄)₄Cl₂:Eu²⁺; and/or
the rare earth-doped titanate comprises NaGdTiO₄:Sm³⁺, NaLaTiO₄:Eu³⁺, and NaLaTiO₄:Dy³⁺; and/or
the rare earth-doped aluminum comprises one or more of SrAl₂O₄:Eu²⁺ and SrAl₂O₄:Dy³⁺; and/or
the metal-doped sulfide comprises one or more of ZnS:Ag, ZnS:Cu, CdS:Ag, and CdS:Cu.s

5. The separator according to any one of claims 1 to 4, **characterized in that**
based on a mass of the coating layer, a mass percentage of the color-developing agent is 1%-50%, preferably 5%-30%.

6. The separator according to any one of claims 1 to 5, **characterized in that**
a particle size by volume Dᵥ50 of the color-developing agent is 0.01 µm-3 µm, preferably 0.1 µm-1 µm.

7. The separator according to any one of claims 1 to 6, **characterized in that**
the coating layer further comprises a filler, the filler comprises one or more of inorganic particles with a dielectric constant being 5 or higher, inorganic particles capable of transmitting active ions, and inorganic particles capable of undergoing electrochemical oxidation and reduction.

8. The separator according to any one of claims 1 to 7, **characterized in that**
the coating layer further comprises a binder, and the binder comprises one or more of polyacrylate, polyacrylonitrile, styrene-butadiene rubber, epoxy resin, acrylonitrile-butadiene copolymer, acrylonitrile-butadiene-styrene copolymer, polybutyl acrylate-ethylhexyl acrylate copolymer, polymethyl methacrylate-ethylhexyl acrylate copolymer, polyvinyl chloride, polyvinylidene fluoride, vinylidene fluoride-hexafluoropropylene copolymer, vinylidene fluoride-trichloroethylene copolymer, polyvinyl alcohol, styrene, polycyanoacrylate, polymethyl methacrylate, polyvinylpyrrolidone, polyvinyl acetate, ethylene-vinyl acetate copolymer, polyimide, gelatin, polyethylene glycol, polyethylene glycol dimethyl ether, and ethylene glycol dimethyl ether.

9. The separator according to any one of claims 1 to 8, **characterized in that**
the base film comprises a first base film and a second base film, and the coating layer is located between the first base film and the second base film.

10. The separator according to any one of claims 1 to 9, **characterized in that**
the separator has an air permeability of 100-400 s/100cc.

11. The separator according to any one of claims 1 to 10, **characterized in that**
the coating layer has a thickness of 0.1 µm-10 µm, preferably 0.5 µm-5 µm; and
the base film has a thickness of 2 µm-12 µm, preferably 3 µm-9 µm.

12. A separator preparation method, **characterized by** comprising:
providing a base film;
providing a coating layer slurry, wherein the coating layer slurry comprises a color-developing agent, and the color-developing agent is capable of developing color when exposed to excitation light; and
applying the coating layer slurry to at least one side surface of the base film to obtain the separator according to any one of claims 1 to 11.

13. The separator preparation method according to claim 12, **characterized in that**
a percentage of the color-developing agent in the coating layer slurry is 0.5%-30%, preferably 4%-15%.

14. A battery, **characterized by** comprising a positive electrode, a negative electrode, and the separator according to any one of claims 1 to 11, wherein the separator is configured to separate the positive electrode and the negative electrode that are adjacent to each other.

15. An electric apparatus, **characterized by** comprising the battery according to claim 14.
